# FASCICULE DE BREVET EUROPEEN

(11) **EP 1 057 704 B1**
(45) Date de publication et mention de la délivrance du brevet: **20.08.2003**
(21) Numéro de dépôt: 00401400.7
(22) Date de dépôt: 19.05.2000
(51) Int. Cl.: B60T 13/569, B60T 13/57

(54) **Amplificateur de force de freinage perfectionné**
Verbesserter Bremsverstärker
Improved brake servo

(30) Priorité: 31.05.1999 FR 9906846
(43) Date de publication de la demande: 06.12.2000
(73) Titulaire: Delphi Technologies, Inc., Troy, MI 48007 (US)
(72) Inventeur: Castel, Philippe, 75005 Paris (FR); Dubus, Jean-Michel, 27940 Port Mort (FR); Petin, Bernard, Dayton OH 45459 (US); Genaudeau, Joseph, 75005 Paris (FR)
(74) Mandataire: Jacobson, Claude

(56) Documents cités:
- EP-A- 0 242 269
- US-A- 5 337 650
- US-A- 5 526 729
- US-A- 5 553 530

## Description

La présente invention concerne les systèmes de freinage pour véhicule automobile et se rapporte plus particulièrement à un amplificateur de force de freinage.

Les systèmes de freinage comportent généralement un maître cylindre destiné à appliquer une pression du fluide de freinage aux freins d'un véhicule lors de l'actionnement d'une pédale de frein.

Entre le maître cylindre et la pédale de frein est interposé un amplificateur de force de freinage, à dépression

Un tel amplificateur de force de freinage comporte les caractéristiques du préambule de la revendication 1.

Un tel amplificateur permet de multiplier la force de freinage appliquée sur la pédale de frein par un coefficient multiplicateur pouvant aller jusqu'à, par exemple, 9

Dans ce type d'amplificateur de force de freinage, le piston est doté d'un unique siège de forme circulaire s'étendant de façon concentrique au siège porté par le plongeur.

Le document US 5553530 A divulgue le préambule de la revendication 1.

Un tel agencement a pour inconvénient de perturber l'écoulement d'air vers la chambre avant.

Le but de l'invention est de pallier cet inconvénient

Elle a donc pour objet un amplificateur de force de freinage du type précité, caractérisé en ce que le ou chaque siège prévu sur le piston est ménagé sur le bord d'un passage de mise en communication desdites chambres.

La forme des sièges correspond donc à celle des passages ce qui permet de rendre plus régulier le flux d'air entre les chambres

En outre, dans un mode de mise en oeuvre, elle permet de procurer des passages d'air plus directe pour le remplissage de la chambre arrière par de l'air entrant de l'extérieur de l'amplificateur.

L'amplificateur de force de freinage suivant l'invention peut en outre comporter les caractéristiques des revendications 2 à 6.

L'invention a également pour objet un piston pour un amplificateur de freinage tel que défini ci-dessus, comportant les caractéristiques de la revendication 7.

Le piston selon l'invention peut comporter les caractéristiques des revendications 8 et 9.

D'autres caractéristiques et avantages ressortiront de la description suivante, donnée uniquement à titre d'exemple, et faite en référence aux dessins annexés sur lesquels
- la figure 1 est une vue schématique en coupe longitudinale d'un amplificateur de force de freinage selon l'art antérieur ;
- la figure 2 est une vue en coupe selon la ligne 2-2 d'une partie de l'amplificateur de la figure 1 ;
- la figure 3 est une vue schématique en coupe longitudinale d'un amplificateur de force de freinage conforme à l'invention ;
- la figure 4 est une vue en coupe selon la ligne 4-4 d'une partie de l'amplificateur de la figure 3 ,
- la figure 5 est une vue en perspective du piston de l'amplificateur de la figure 3; et
- la figure 6 est une vue partielle en coupe transversale d'un autre exemple de réalisation d'un amplificateur de force de freinage conforme à l'invention.

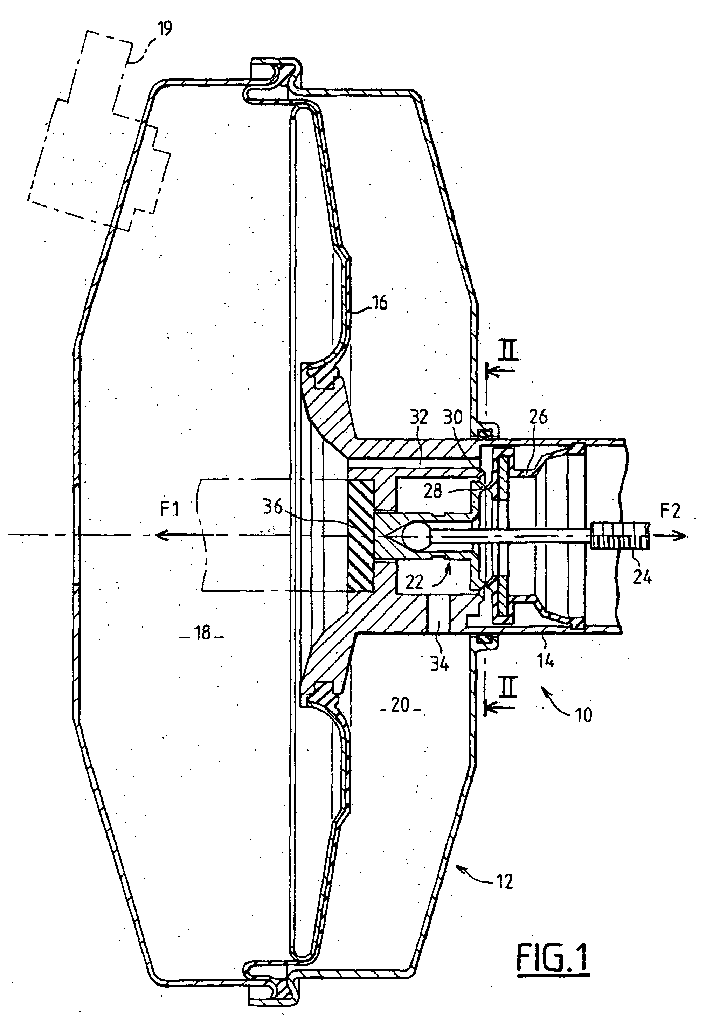

Sur la figure 1, on a représenté une vue en coupe d'un amplificateur de force de freinage selon l'état de la technique, désigné par la référence numérique générale 10

Il comporte : une enceinte close 12 ; un piston 14 déplaçable axialement dans l'enceinte et dont une partie est en communication avec l'atmosphère ambiant ; une membrane 16 portée par le piston 14 et séparant l'enceinte 12 en une chambre avant 18 équipée de moyens 19 de raccordement à une source de dépression (non représentée) et une chambre arrière 20 dans laquelle règne une pression variable ; un plongeur 22 monté déplaçable axialement dans le piston 14 et auquel est rendue solidaire une tige de commande 24 raccordée à la pédale de frein d'un véhicule automobile ; et un clapet 26 coopérant avec des sièges 28 et 30 portés par le plongeur et le piston, respectivement

Des passages, 32 et 34,. sont prévus dans le piston 14 pour mettre en communication respectivement la chambre avant 18 avec la chambre arrière 20 et pour mettre en communication la chambre 20 avec l'atmosphère ambiant sous la commande du plongeur 22 et du clapet 26.

Le plongeur 22 est monté déplaçable dans le piston 14 entre une position avancée de freinage et une position reculée de repos. Des moyens élastiques sollicitent le plongeur 22 en position de repos.

Sur la figure. 1, l'amplificateur de force de freinage 10 est représenté en position de repos. Dans cette position, le clapet. 26 est en appui sur le siège 28 ou " siège d'air "du plongeur 22 et est espacé du siège 30 ou "siège de dépression" du piston 14.

Dès lors, les chambres avant 18. et arrière 20 sont en communication par l'intermédiaire des passages 32 et 34 et sont à une pression identique.

Lorsque l'on exerce un effort sur la pédale de frein, le plongeur 22 se déplace dans la direction représentée par la flèche F₁, c'est-à-dire en direction de la chambre avant 18 Au cours de ce mouvement, le plongeur 22 exerce un effort sur la partie centrale d'un disque de réaction 36 élastiquement déformable disposé dans une coupelle (non représentée). La déformation périphérique consécutive du disque 36 engendre un déplacement du piston 14 selon la direction représentée par la flèche F₂ ce qui provoque l'application du siège 30 du piston contre le clapet 26 et le déplacement de ce dernier selon la direction F₂.

Ce déplacement provoque un espacement du clapet 26 par rapport au siège 28 du plongeur 22 et donc une mise en communication de la chambre arrière 20 avec l'atmosphère par l'intermédiaire du passage 34.

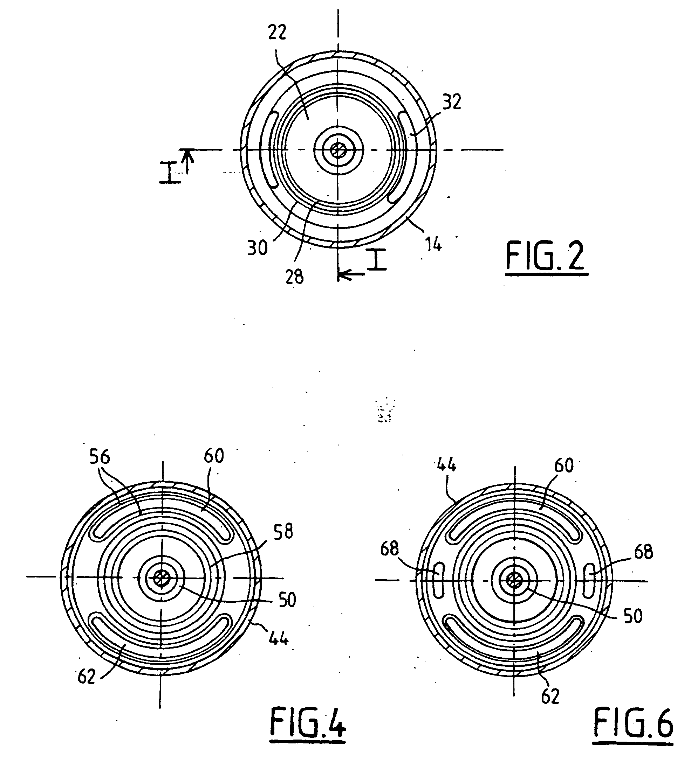

Comme cela est visible sur la figure 2 les sièges 28 et 30 sont respectivement constitués par des nervures circulaires portées respectivement par le plongeur 22 et par le piston 14.

Comme mentionné précédemment, cet agencement, et en particulier la forme du siège 30 sur le piston, provoque des turbulences en particulier dans le flux d'air circulant de l'extérieur de l'appareil vers la chambre arrière 20 le long du plongeur 22 entre le plongeur et le piston, d'abord, puis par le passage 34 ensuite.

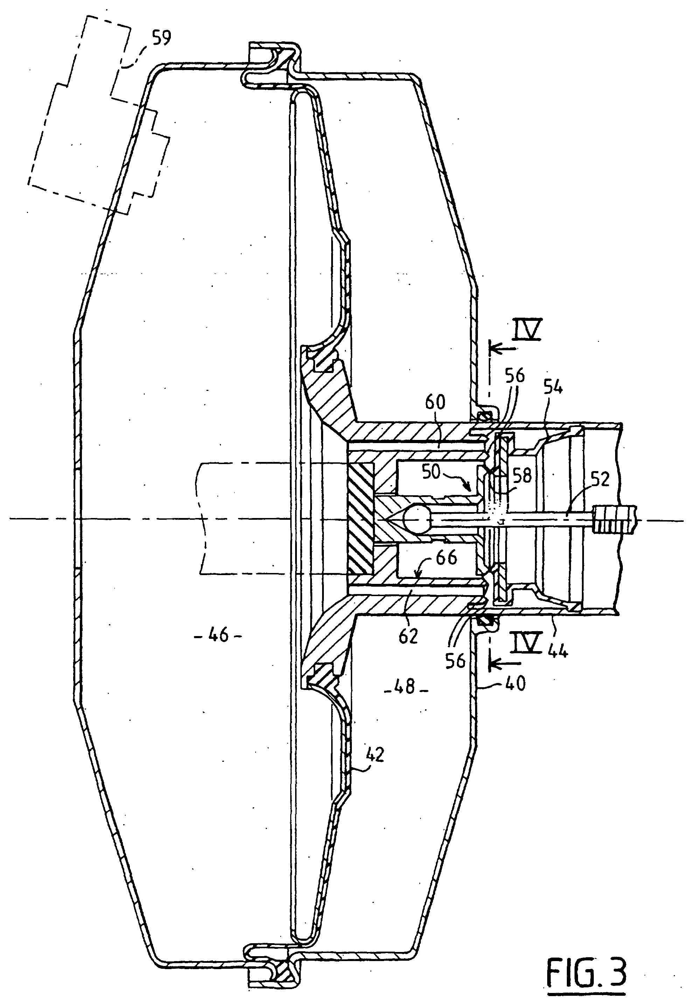

Sur les figures 3 à 5, on a représenté un premier exemple de réalisation d'un amplificateur de force de freinage permettant de pallier cet inconvénient.

Comme dans l'amplificateur de force de freinage représenté sur la figure 1, le dispositif représenté sur la figure 3 comporte une enceinte 40 séparée par une membrane 42, portée par un piston 44 axialement déplaçable par rapport à l'enceinte, en une chambre avant 46 et une chambre arrière 48.

Un plongeur 50 doté d'une tige de commande 52 est monté axialement déplaçable dans le piston 44 entre une position avancée, instable, de freinage et une position reculée, stable, de repos.

Un clapet 54 ,qui y coopère avec des sièges de "dépression" 56 et 58 "d'air" portés respectivement par le piston et par le plongeur, assure la mise en communication sélective de la chambre arrière 48 soit, en position de repos du plongeur, avec la chambre avant 46, laquelle est en communication constante avec une source de dépression par l'intermédiaire de moyens de raccordement 59, soit, lors du freinage, avec la partie arrière du piston 44 dans laquelle règne une pression égale à la pression atmosphérique, c'est-à-dire la zone du piston située à l'opposé des chambres par rapport au clapet 54.Comme cela est classique, on multiplie ainsi la force de freinage appliquée sur la pédale de frein.

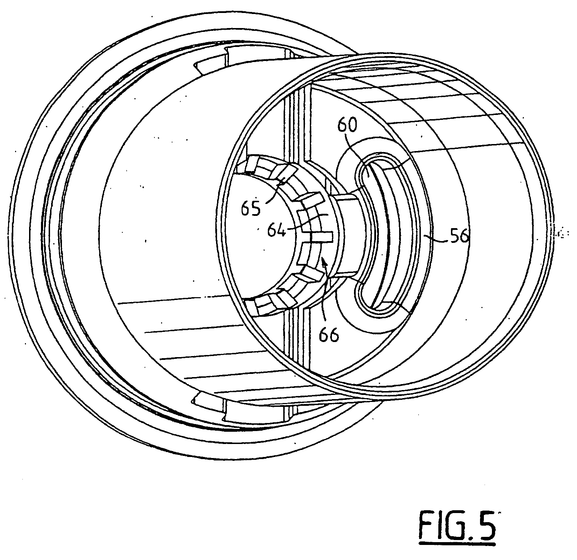

En se référant aux figures 4 et 5, on voit que le siège 58 porté par le plongeur 50 est constitué par une nervure circulaire sur laquelle repose une surface correspondante du clapet 54, alors que le siège 56 porté par le piston 44 est constitué par le bord arrière de passages 60 et 62 ménagés dans le piston 44 pour assurer la mise en communication des chambres 46 et 48

De préférence, ces passages 60 et 62 et les sièges définis par le bord périphérique de ces derniers ont chacun une section en coupe transversale en forme de haricot, c'est-à-dire en forme de couronne tronquée, et le piston est doté de deux passages, tels que 60,62, symétriques par rapport à l'axe du piston.

On conçoit que cet agencement permet de rendre sensiblement régulier le flux d'air de la. chambre arrière vers la chambre avant 46 en le concentrant dans une zone du piston

En se référant à la figure 5, on voit que la circulation de l'air vers la chambre arrière 48 s'effectue par passage à travers des gorges longitudinales, telles que 64, délimitées par des nervures 65 radiales ménagées dans un alésage 66 du piston dans lequel coulisse le plongeur 50, ces gorges communiquant avec la chambre arrière 48

Les nervures 65 assurent le coulissement du plongeur 50 avec un jeu réduit.

En se référant à la figure 6, sur laquelle on a représenté un autre exemple de réalisation d'un amplificateur de force de freinage conforme à l'invention, on voit qu'il est possible, en variante, de prévoir un ensemble de passages secondaires, tels que 68, débouchant, d'une part, à une extrémité, dans la chambre arrière 48 et, d'autre part, à l'extrémité opposée, dans le volume interne du piston 44, dans une zone située de préférence en avant du plan défini par les sièges 56 de manière à augmenter le flux d'air de la chambre arrière 48 vers la chambre avant 46 lors du retour du plongeur 50 en position de repos On diminue ainsi le temps de réponse de l'amplificateur, d'abord en augmentant la section totale des passages disponibles, ensuite en prévoyant des passages dans lesquels l'air est mois soumis à lamination, dont à des turbulences, que dans le cas précédent

On conçoit que l'invention qui vient d'être décrite, qui permet d'améliorer la circulation d'air vers la chambre arrière et en provenance de cette dernière rend en outre plus aisée la réalisation du piston dans la mesure où les sièges peuvent être réalisés dans ce dernier par démoulage en utilisant des poinçons.

On notera par ailleurs qu'un tel piston peut être utilisé dans différents types d'amplificateurs de force de freinage à dépression , en particulier dans les amplificateurs de type à double clapet.

Bien entendu, toute mise en oeuvre de l'invention peut être adaptée aux conditions particulières de fonctionnement de l'amplificateur. En particulier, l'invention s'applique également à un amplificateur de force de freinage du type à surpression.

Il est enfin possible, en variante, de ménager le siège porté par le piston 44 selon une autre forme, c'est-à-dire une configuration selon laquelle il comporte deux parties entourant chacune un des passages 60 et 62 raccordées par une partie centrale coaxiale au plongeur

## Revendications

1. Amplificateur de force de freinage, comportant une enceinte (40), une membrane (42) séparant l'enceinte en une chambre avant (46) qui est équipée de moyens de raccordement à une source de dépression et en une chambre arrière (48), un piston (44) déplaçable axialement dans l'enceinte et sur lequel est montée la membrane (42), un plongeur (50) monté axialement déplaçable dans le piston sous la commande d'une pédale de frein entre une position instable de freinage et une position reculée stable de repos, et un clapet (54) coopérant avec des sièges (56,58) prévus sur le piston et sur le plongeur de manière à, d'une part, isoler la chambre arrière (48) de l'atmosphère ambiant et mettre cette dernière en communication avec la chambre avant (46), lorsque le plongeur est en position de repos et, d'autre part, isoler la chambre arrière (48) de la chambre avant (46) et mettre la chambre arrière en communication avec l'atmosphère ambiant lors du freinage, **caractérisé en ce que** le ou chaque siège (56) prévu sur le piston est ménagé sur le bord d'un passage (60,62) de mise en communication desdites chambres (46,48).

2. Amplificateur de force de freinage selon la revendication I, **caractérisé en ce que** chaque passage (60,62) a une section en coupe transversale en forme de couronne tronquée

3. Amplificateur de force de freinage selon l'une des revendications 1 et 2, **caractérisé en ce qu'**il comporte deux passages (60,62) de mise en communication desdites chambres disposés de façon symétrique par rapport à l'axe du piston.

4. Amplificateur de force de freinage selon la revendication 3, **caractérisé en ce qu'**il comporte un unique siège comportant deux parties latérales ménagées chacune sur le bord d'un desdits passages raccordées par une partie circulaire coaxiale au plongeur.

5. Amplificateur de force de freinage selon l'une quelconque des revendications 1 à 4, **caractérisé en ce qu'**il comporte un premier ensemble de passages primaires (64) ménagés dans un alésage (66) du piston dans lequel coulisse le plongeur et débouchant vers la chambre arrière et un deuxième ensemble de passages secondaires (68) adaptés pour augmenter le flux d'air entre les chambres arrière et avant lors du retour du plongeur (50) en position de repos.

6. Amplificateur de force de freinage selon la revendication 5, **caractérisé en ce que** les passages secondaires (68) débouchent dans le piston dans une zone située dans un plan situé en avant d'un plan défini par les sièges correspondants.

7. Piston pour amplificateur de freinage selon l'une quelconque des revendications 1 à 6, comportant un alésage interne (66) dans lequel un plongeur (50) est destiné à être monté de façon coulissante entre une position avancée instable de freinage et une position reculée stable de repos, au moins un passage (60,62) de. mise en communication d'une chambre avant (46) et d'une chambre arrière (48) délimitées par une membrane (42) venant se fixer sur le piston (44), au moins un siège (56) destiné à coopérer avec un clapet (54) venant se monter sur le piston pour la fermeture du ou de chaque passage (60,62) lors du freinage, l'alésage (66) étant pourvu de deuxièmes passages (64) de mise en communication, lors du freinage, de la chambre arrière (48) avec l'atmosphère ambiant, **caractérisé en ce que** le ou chaque siège (56) est ménagé chacun sur le bord d'un desdits au moins. un passage (60,62) de mise en communication desdites chambres

8. Piston selon la revendication 7, **caractérisé en ce que** chaque passage (60,62) de mise en communication des chambres a une section en coupe transversale en forme de couronne tronquée.

9. Piston selon l'une des revendications 7 et 8, **caractérisé en ce qu'**il comporte des passages additionnels (68) adaptés pour- augmenter le flux d'air entre les chambres arrière et avant lors du retour du plongeur en position de repos

## Patentansprüche

1. Bremskraftverstärker mit einem Gehäuse (40), einer Membran (42), die das Gehäuse in eine vordere Kammer (46), die mit Mitteln zur Verbindung mit einer Unterdruckquelle versehen ist, und eine hintere Kammer (48) unterteilt, einem Kolben (44), der axial in dem Gehäuse verschiebbar ist und an den die Membran (42) angebracht ist, einem Plunger (50), der axial verschiebbar in dem Kolben angeordnet und unter der Wirkung eines Bremspedals zwischen einer instabilen Bremsposition und einer zurückgezogenen stabilen Ruheposition beweglich ist, und einer Verschlussklappe (54), die mit Sitzen (56,58) zusammenwirkt, die an dem Kolben und dem Plunger derart angeordnet sind, dass sie einerseits die hintere Kammer (48) gegenüber der Umgebungsatmosphäre isolieren und diese in Verbindung setzen mit der vorderen Kammer (46), während sich der Plunger in der Ruheposition befindet, und andererseits die hintere Kammer (48) von der vorderen Kammer (46) trennen und die hintere Kammer in Verbindung mit der Umgebungsatmosphäre bringen, wenn gebremst wird, **dadurch gekennzeichnet, dass** der oder jeder Sitz (56), der an dem Kolben vorgesehen ist, am Rand eines Kanals (60,62) ausgebildet ist, der die Kammern (46,48) verbindet.

2. Bremskraftverstärker nach Anspruch 1, **dadurch gekennzeichnet, dass** jeder Kanal (60,62) einen Querschnitt in der Form eines abgeschnittenen Kranzes aufweist.

3. Bremskraftverstärker nach einem der Ansprüche 1 und 2, **dadurch gekennzeichnet, dass** er zwei Kanäle (60,62) aufweist, die die Kammern verbinden und die symmetrisch in bezug auf die Achse des Kolbens angeordnet sind.

4. Bremskraftverstärker nach Anspruch 3, **dadurch gekennzeichnet, dass** er einen einzigen Sitz aufweist, der zwei seitliche Teile umfasst, die jeweils am Rand eines der Kanäle angeordnet sind und durch einen kreisförmigen koaxialen Bereich des Plungers verbunden sind.

5. Bremskraftverstärker nach einem der Ansprüche 1 bis 4, **dadurch gekennzeichnet, dass** er eine erste Anordnung aus Primär-Kanälen (64), die in einer Bohrung (66) des Kolbens ausgeführt sind, in der der Plunger verschiebbar ist, und die in die hintere Kammer münden, und eine zweite Anordnung aus Sekundär-Kanälen (68) umfasst, die vorgesehen sind zur Vergrösserung des Luftstroms zwischen der hinteren und vorderen Kammer während der Rückkehr des Plungers (50) in die Ruheposition.

6. Bremskraftverstärker nach Anspruch 5, **dadurch gekennzeichnet, dass** die Sekundär-Kanäle (68) in dem Kolben in einer Zone münden, die sich in einer Ebene beflnden, die vor einer Ebene liegt, die durch die entsprechenden Sitze definiert wird.

7. Kolben für einen Bremsverstärker gemäss einem der Ansprüche 1 bis 6, mit einer inneren Bohrung (66), in der sich ein Plunger (50) befindet, der verschiebbar ist zwischen einer instabilen vorgerückten Bremsposition und einer zurückgezogenen stabilen Ruheposition, wenigstens einem Kanal (60,62) zur Verbindung einer vorderen Kammer (46) und einer hinteren Kammer (48). die durch eine Membran (42) getrennt sind, die an dem Kolben (44) befestigt ist, wenigstens einem Sitz (56), der zusammenwirkt mit einer Verschlussklappe, die an dem Kolben montiert ist zum Verschliessen des oder jedes Kanals (60,62) während der Bremsung, welches Bohrung (66) mit zweiten Kanälen (64) zur Verbindung der hinteren Kammer (48) mit der Umgebungsatmosphäre während der Bremsung vorgesehen ist, **dadurch gekennzeichnet, dass** der oder jeder Sitz (56) am Rand des wenigstens einen Kanals (60,62) zur Verbindung der Kammern vorgesehen ist.

8. Kolben nach Anspruch 7, **dadurch gekennzeichnet, dass** der oder jeder Kanal (60,62) zur Verbindung der Kammern einen Querschnitt in der Form eines abgeschnittenen Kranzes aufweist.

9. Kolben nach einem der Ansprüche 7 und 8, **dadurch gekennzeichnet, dass** er zusätzliche Kanäle (68) umfasst, die zur Vergrösserung des Luftstroms zwischen der hinteren Kammer und der vorderen Kammer während der Rückkehr des Plungers in die Ruheposition vorgesehen sind.

## Claims

1. Braking force amplifier comprising a housing (40), a membrane (42) which divides the housing into a front chamber (46), which is provided with means for connection to a reduced pressure source, and a rear chamber (48), a piston (44) which is axially displaceable in the housing and on which the membrane (42) is mounted, a plunger (50) which is mounted so as to be axially displaceable in the piston, under the control of a brake pedal, between an unstable braking position and a retracted, stable rest position, and a shut-off valve (54) which co-operates with seats (56, 58) which are provided on the piston and on the plunger in order, on the one hand, to isolate the rear chamber (48) from the ambient atmosphere and to place the rear chamber (48) in communication with the front chamber (46) when the plunger is in the rest position and, on the other hand, to isolate the rear chamber (48) from the front chamber (46) and to place the rear chamber in communication with the ambient atmosphere during braking, **characterised in that** the or each seat (56) provided on the piston is arranged on the edge of a communication passage (60, 62) for the chambers (46, 48).

2. Braking force amplifier according to claim 1, **characterised in that** each passage (60, 62) has a cross-section of truncated crown-like form.

3. Braking force amplifier according to either claim 1 or claim 2, **characterised in that** it comprises two chamber communication passages (60, 62) which are arranged in a symmetrical manner relative to the piston axis.

4. Braking force amplifier according to claim 3, **characterised in that** it comprises a single seat which comprises two lateral portions which are each. arranged on the edge of one of the passages and which are connected to the plunger by means of a coaxial circular portion.

5. Braking force amplifier according to any one of claims 1 to 4, **characterised in that** it comprises a first assembly of primary passages (64), which are arranged in a piston bore (66) in which the plunger slides and which opens out towards the rear chamber, and a second assembly of secondary passages (68) which are adapted to increase the flow of air between the rear and front chambers when the plunger (50) returns to the rest position.

6. Braking force amplifier according to claim 5, **characterised in that** the secondary passages (68) open out in the piston in a zone located in a plane which is located in front of a plane defined by the corresponding seats.

7. Piston for a braking amplifier according to any one of claims 1 to 6, comprising an internal bore (66), in which a plunger (50) is intended to be mounted so as to slide between an advanced, unstable braking position and a retracted, stable rest position, at least one passage (60, 62) for the communication of a front chamber (46) and a rear chamber (48) which are delimited by a membrane (42) which is fixed to the piston (44), at least one seat (56) which is intended to co-operate with a shut-off valve (54) which is mounted on the piston in order to close the or each passage (60, 62) during braking, the bore (66) being provided with second passages (64) which place the rear chamber (48) in communication with the ambient atmosphere during braking, **characterised in that** the or each seat (56) is arranged in each case on the edge of one of the at least one communication passage(s) (60, 62) for the chambers.

8. Piston according to claim 7, **characterised in that** each communication passage (60, 62) of the chambers has a cross-section of truncated crown-like form.

9. Piston according to either claim 7 or claim 8, **characterised in that** it comprises additional passages (68) which are adapted to increase the flow of air between the rear and front chambers when the plunger returns to the rest position.
